# EUROPEAN PATENT APPLICATION

(11) **EP 0 908 713 A1**
(43) Date of publication of application: **14.04.1999**
(21) Application number: 97307878.5
(22) Date of filing: 06.10.1997
(51) Int. Cl.: G01K 7/04

(54) **Temperature instrumented semiconductor wafer**

(71) Applicant: CLAUD S. GORDON COMPANY, Richmond, IL 60071 (US)
(72) Inventor: Schwagerman, William H., McHenry, Illinois 60050 (US); Shuh, William C., Delavan, Wisconsin 53115 (US); Culbertson, David P., Bristol, Wisconsin 53104 (US)
(74) Representative: Kidd, Piers Burgess

(57) **Abstract**

A temperature sensor includes a semiconductor wafer 26 having a thermocouple junction 46 formed on or placed upon the wafer surface 30. The thermocouple junction 46 may consist of a first patterned conductor 36 overlying the wafer 26 with a second patterned conductor 40 disposed from it. The first and second patterned conductors 36 and 40 make electrical contact with one another at an overlapping region to create the thermocouple junction 46. Additional thermocouple junctions 89 may be formed vertically above the thermocouple junction 46 to provide a plurality of vertically stacked thermocouples to measure vertical thermal gradients. A method of forming the temperature sensor includes overlying a semiconductor substrate 26 with an insulating material 66. The thermocouple junction 46 is formed on the insulating layer 66 by forming two dissimilar conductor materials such that they are disposed from one another except for at their ends, where they make electrical contact and form the thermocouple junction 46.

## Description

### FIELD OF THE INVENTION

This invention generally relates to a temperature sensing device for measuring temperatures in manufacturing processes. More particularly, the invention relates to a temperature instrumented semiconductor wafer operable to measure the temperature at a surface of the wafer within a semiconductor manufacturing apparatus.

### BACKGROUND OF THE INVENTION

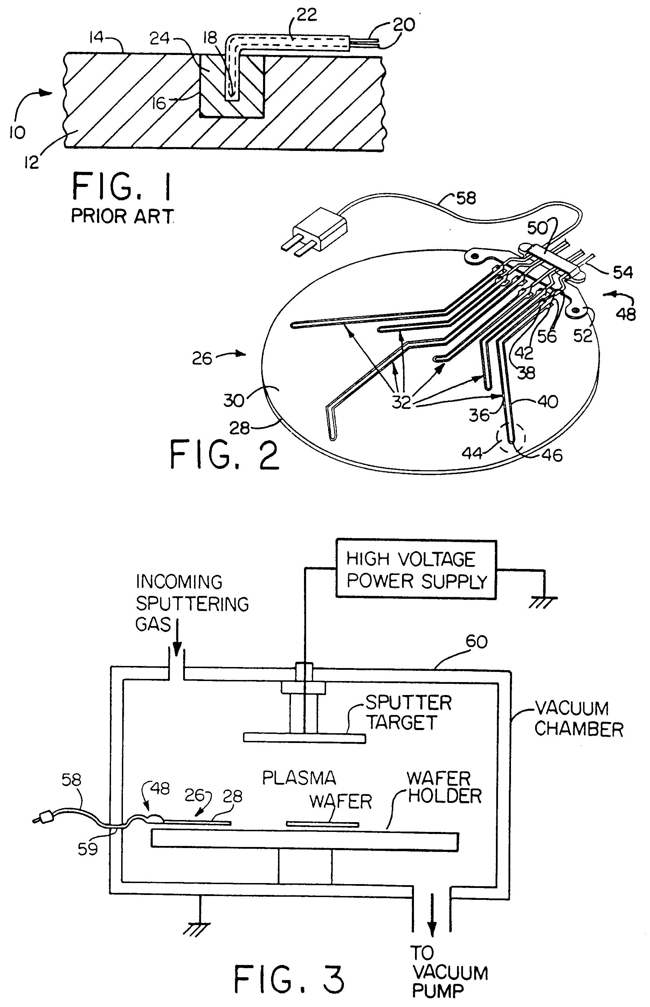

The temperature at a semiconductor wafer surface is an important process parameter in semiconductor fabrication processes, particularly at the surface of the semiconductor wafer. To control the wafer surface temperature, the temperature must first be accurately measured. A prior art thermocouple-embedded semiconductor wafer 10 for determining the wafer temperature within a semiconductor manufacturing process is illustrated in Figure 1. A semiconductor substrate 12 having a top surface 14 has a cavity 16 within the substrate 12. A thermocouple junction 18, formed by two dissimilar electrical conductors 20, is surrounded by a sheath 22 which is embedded in the cavity 16 and secured with a ceramic potting compound 24. A temperature difference between the cold junction (not shown) and the thermocouple junction 18 creates an electromotive force which is measurable in millivolts.

One disadvantage of the prior art thermocouple-embedded semiconductor wafer 10 shown in Figure 1 is the expensive and laborious manufacturing process. The fabrication of this sensor includes forming holes within the substrate 12 to create the cavity 16. The thermocouple junction 18 formed by the wires 20 must be manually placed within the cavity 16 and the ceramic potting compound 24 must fill the cavity 16 to secure the thermocouple junction 18. Furthermore, because the thermocouple junction 18 is small (to fit within the cavity 16), the device is extremely fragile. In addition, since one often wishes to obtain temperatures at different locations about the surface 14 of the substrate 12 (to obtain a thermal surface gradient), the cost of this device increases dramatically as the number of thermocouples in the substrate 12 increases.

Another disadvantage of the prior art thermocouple-embedded semiconductor wafer 10 is that this sensor has a limited lifetime for high temperature measurement applications. The affixation of the thermocouple sheath 22 within the ceramic potting compound 24 results in a delicate arrangement that is vulnerable to damage from handling. This further increases the cost of the prior art temperature sensor over time since it must be regularly replaced.

Yet another disadvantage of this prior art temperature sensor is that the embedded thermocouple junction 18 causes thermal loading on the wafer due to the mass of the thermocouple junction 18, the thermocouple wires 20 and the sheath 22. This thermal loading can result in a disturbance of the wafer temperature at the cavity 16 of the thermocouple junction location as well as along the surface of the wafer where the sheath 22 lies, thereby resulting in inaccurate temperature measurements. Further, since one may wish to have multiple thermocouple junctions within the water, the wires, junctions and corresponding sheaths cause a further disturbance of the wafer temperature distribution and also make handling of the wafer difficult.

### SUMMARY OF THE INVENTION

One aspect of the invention includes a temperature sensor having a semiconductor wafer and a thermocouple junction overlying or formed on a surface of the semiconductor water. The thermocouple junction may consist of a first patterned conductor overlying the semiconductor wafer and a second patterned conductor laterally disposed from the first conductor, wherein the first and second conductors make electrical contact with one another, thereby creating the thermocouple junction.

In another aspect of the invention, a plurality of thermocouple junctions may be placed or formed at various locations on the surface of the semiconductor wafer. This allows one to map a thermal surface profile of the wafer. An electrical connector may also be coupled to the first and second patterned conductors for relaying electrical signals from the thermocouple junctions.

In another aspect of the invention, a diffusion barrier layer may be disposed between the first and second patterned conductors and the semiconductor substrate to prevent migration of semiconductor material from the substrate to the first and second patterned conductors. A protective layer may also overly the first and second patterned conductors, thereby protecting the first and second patterned conductors from contamination or degradation. An insulating layer may also be disposed between the first and second patterned conductors and the semiconductor wafer to provide electrical isolation between the semiconductor wafer and the first and second patterned conductors.

In a further aspect of the invention, a plurality of thermocouples may be formed above the first thermocouple to form vertically stacked thermocouples at predetermined vertical depths. The plurality of vertically stacked thermocouples allows one to map a vertical thermal gradient in a semiconductor wafer.

In yet another aspect of the invention, a method of forming a thermocouple sensor includes the step of forming a thermocouple junction on a top surface of a semiconductor wafer. This step may include the steps of overlying a semiconductor substrate with an insulating material and forming the thermocouple junction on the insulating material. The step of forming a thermocouple junction on the insulating layer may include forming a first patterned conductive layer. A second patterned conductive layer is subsequently formed as well. The first and second patterned conductive layers form conductive strips which are laterally disposed from one another along their length and make electrical contact with one another, thereby forming a thermocouple junction. A subsequent step of overlying the first and second patterned conductors with a protective layer may be included to provide and maintain electrical isolation between the first and second patterned conductive strips except at the termination point. The protective layer also protects the first and second conductors from contamination or degradation.

### BRIEF DESCRIPTION OF THE DRAWINGS

Figure 1 is a fragmentary cross-sectional view of a prior art thermocouple-embedded semiconductor wafer.
Figure 2 is a perspective view illustrating a temperature instrumented semiconductor wafer having a plurality of thermocouple junctions formed on the semiconductor wafer surface.
Figure 3 is a side view illustrating the temperature instrumented wafer in a semiconductor manufacturing apparatus.
Figure 4 is an enlarged fragmentary perspective view of a thermocouple junction of Figure 2 on the surface of the semiconductor wafer.
Figure 5 is a fragmentary cross-sectional view taken along dotted line 62 of Figure 4 illustrating the thermocouple formed on the semiconductor wafer.
Figure 6 is a fragmentary cross-sectional view similar to Figure 5, but illustrating an alternative embodiment of the invention in which the thermocouple formed on the surface of the semiconductor wafer has a diffusion barrier layer disposed between the thermocouple and the semiconductor substrate.
Figure 7 is a fragmentary cross-sectional view taken along dotted line 64 of Figure 4 illustrating the termination point wherein the two dissimilar conductive materials make electrical contact thereby forming the thermocouple junction.
Figures 8a-8h are fragmentary cross-sectional diagrams illustrating the steps in a semiconductor shadowmasking manufacturing process to build the temperature instrumented wafer of the present invention.
Figures 9a-9i are fragmentary cross-sectional diagrams illustrating the steps in a semiconductor photolithography manufacturing process to build the temperature instrumented semiconductor wafer of the present invention.
Figure 10 is a fragmentary cross-sectional diagram illustrating a vertically fabricated thermocouple on the surface of a semiconductor water.
Figure 11 is a fragmentary cross-sectional diagram illustrating vertically stacked thermocouples formed on a semiconductor water.

### DETAILED DESCRIPTION OF THE INVENTION

A temperature instrumented semiconductor wafer in accordance with the present invention includes a thermocouple formed on or placed upon a surface of a semiconductor water. Having the thermocouple on the surface of the semiconductor wafer provides for an accurate determination of the wafer surface temperature without having to account for vertical thermal gradients within the semiconductor water. Forming the thermocouple on the surface using semiconductor manufacturing techniques also reduces errors due to thermal loading in that it allows the thermocouple junction and its associated leads to be made substantially smaller in mass than prior art discrete thermocouples. A plurality of such thermocouples may be formed on or placed upon the surface of the semiconductor wafer at various locations on the water, thereby allowing one to map out the thermal surface profile of the semiconductor wafer.

The thermocouple may be formed by overlying the semiconductor substrate with an electrically insulating material and subsequently patterning two dissimilar conductive materials over the insulating material. The two dissimilar conductive materials are laterally disposed from one another (and therefore electrically isolated) except for an overlapping region in which the two dissimilar conductive materials overlap one another and make electrical contact, thereby forming the thermocouple junction. The thermocouple may be covered by a protective layer that protects the thermocouple from contamination and degradation. The protective layer is electrically insulating to further maintain electrical isolation of the conductive materials (except for their junction) and is thermally conductive to allow the thermocouple junction to accurately measure the actual wafer surface temperature.

A method of forming a thermocouple sensor in accordance with the present invention includes forming or placing a thermocouple onto a surface of a semiconductor water. Forming the thermocouple onto the surface of the semiconductor wafer includes forming first and second dissimilar conductive materials over the insulating material such that they are laterally disposed from one another. The patterned first and second conductors come together in an overlapping region and make electrical contact, thereby forming a thermocouple junction. In a like manner, a plurality of such thermocouples may be formed at various locations about the semiconductor wafer surface, thereby allowing one to map a thermal surface profile across the surface of the semiconductor water.

Figure 2 is a perspective view of a temperature instrumented semiconductor wafer 26 in accordance with the present invention. The temperature instrumented semiconductor wafer 26 includes a semiconductor substrate 28 having a top surface 30. Alternatively, the substrate 28 may include other materials such as alumina, glass, ceramics, etc. A plurality of thermocouples 32 are formed on the wafer substrate 28. Each thermocouple 32 has a first conductive strip 36 formed on the top surface 30. The first conductive strip 36 terminates at one end in a first bond pad 38. A second conductive strip 40 is laterally disposed from the first conductive strip 36 and terminates at one end in a second bond pad 42. Both the first and second conductive strips 36 and 40 terminate at their opposite ends at region 44 where they overlap and come into electrical contact with one another and form a thermocouple junction 46. The other thermocouples 32 may also be identical in construction and form, differing only in their location on the wafer surface 30.

Temperature instrumented semiconductor wafer 26 of Figure 2 also includes, in a preferred embodiment, a wafer connector fixture 48 having a stress relief clamp 50 and a wafer connector 52 coupled together. The wafer connector fixture 48 holds the semiconductor wafer 26 and a plurality of thermocouple wiring sheaths 54 each having two wires 56. The stress relief clamp 50 and wafer connector 52 hold the plurality of thermocouple sheathes 54 in a fixed relationship with respect to the wafer 26. This feature provides improved durability and helps maintain operability notwithstanding operator handling. Each of the two wires 56 within each thermocouple sheath 54 is electrically connected such that a first wire is coupled to the first bond pad 38 and a second wire is coupled to the second bond pad 42 of the thermocouple 32. In a preferred embodiment, the two wires 56 are welded to their respective bond pads 38 and 42 to provide a pure transition, thereby avoiding problems with eutectics and maintaining homogeneity in the transition. A connector 58 is coupled to each thermocouple sheath 54 for electrically connecting the thermocouple junction 46 to conversion circuitry (not shown). Operationally, the thermocouple junction 46 of the temperature semiconductor wafer 26 senses a difference in temperature between the thermocouple junction 46 and its opposite end (e.g. the cold junction) and creates an electromotive force in millivolts. The magnitude of the voltage is a function of the temperature difference and is converted into a temperature value that represents the temperature at the thermocouple junction 46. Alternatively, the plurality of thermocouple sheaths 54 may terminate into a parallel-type connector for electrical communication to the conversion circuitry.

Figure 3 is a side view showing the temperature instrumented wafer 26 located within a semiconductor manufacturing apparatus 60. The connector 58 exits the apparatus 60 to make electrical connection to conversion circuitry via a feedthrough 59. Although a sputtering machine is illustrated in this example, the invention is applicable to any type of semiconductor manufacturing apparatus.

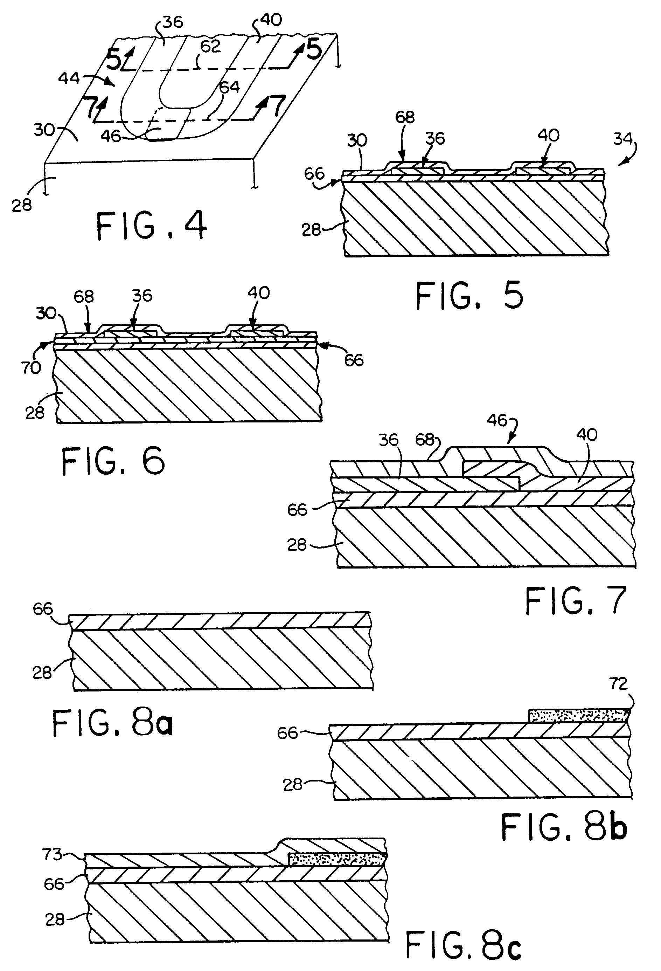

Figure 4 is an enlarged perspective view of the end region 44 of one of the thermocouples 32 of Figure 2 where the thermocouple junction 46 is formed. As shown, the first conductor 36 is laterally disposed from the second conductor 40 along their longitudinal lengths. The first conductor 36 and the second conductor 40 curve toward each other in the end region 44 and at the overlapping region 46 come into electrical contact with one another and form the thermocouple junction 46. In a preferred embodiment, one of the conductors 36 is tantalum and the other conductor 40 is nickel. Preferably, the conductors 36 and 40 are pure metals since maintaining composition homogeneity in alloys is challenging and the thermoelectric properties of alloys are strongly dependent upon their composition. Use of pure materials also provides improved matching of the conductors 36 and 40 and the two wires 56.

Figure 5 is a cross-sectional view taken along dotted line 62 of Figure 4. At this location the conductors 36 and 40 are laterally disposed and electrically isolated from one another. Overlying the semiconductor substrate 28 is an insulating layer 66 on which the conductors 36 and 40 are deposited and patterned. A protective layer 68, in the preferred embodiment, overlies both conductors 36 and 40. The protective layer 68 is optional in that it is not necessary for the thermocouple to operate. However, it may be employed to protect the conductors 36 and 40 from any contamination or degradation. Preferably, the protective layer 68 is alumina.

Figure 6 is a cross-sectional view of an alternative embodiment taken along the same dotted line 62 of Figure 4, which is substantially the same as the embodiment shown in Figure 5 except that a diffusion barrier layer 70 is disposed above the insulating layer 66. The diffusion barrier layer 70 is preferably alumina and may be utilized to prevent the migration of semiconductor material from the wafer substrate 28, thereby preventing contamination of the conductors 36 and 40.

Figure 7 is a cross-sectional view taken along dotted line 64 of Figure 4, and shows the end region 44 where the conductors 36 and 40 overlap and come into electrical contact with one another in the overlapping region, which is insulated from the wafer substrate 28 by the insulating layer 66 and is covered by the protective layer 68.

Figures 8a-8h are fragmentary cross-sectional diagrams that illustrate a preferred method of forming a thermocouple on the surface 30 of the semiconductor wafer substrate 28, a shadowmasking film deposition process. In Figure 8a, the wafer substrate 28, which may be made of silicon, is covered by the insulating layer 66 using a standard oxidation-type process such as steam or any other known semiconductor fabrication process. The insulating layer 66 may consist of a silicon dioxide or alternatively may be a silicon nitride. Other type insulating materials may also be used. The insulating layer 66 insulates the thermocouple junction 46 that will subsequently be formed thereon from any electrical interference with the semiconductor wafer substrate 28.

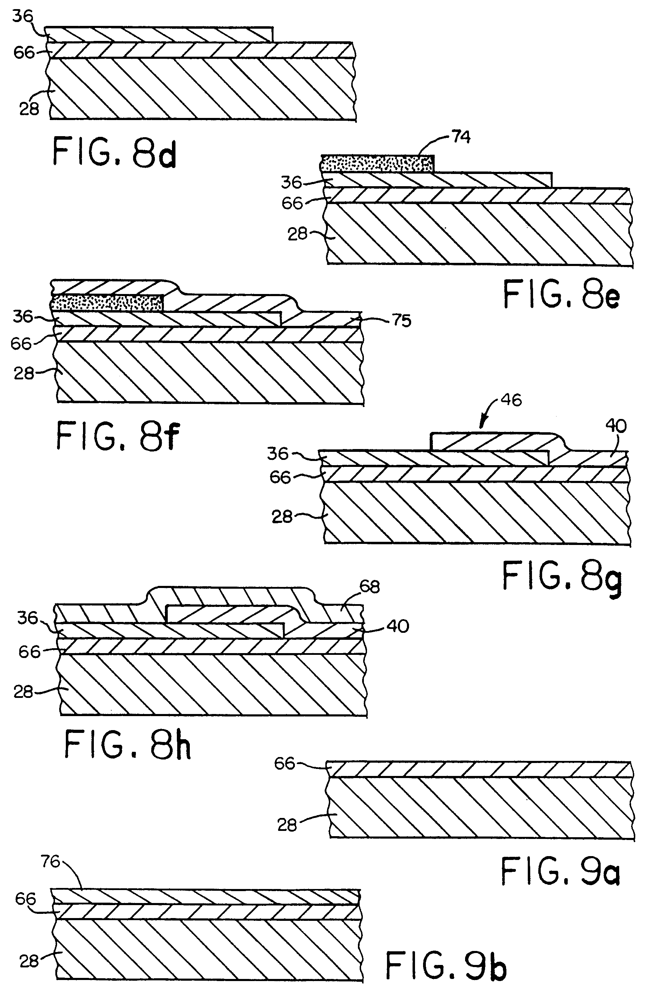

In Figure 8b, a first mask template 72 is placed over the insulating layer 66. The mask template 72 selectively allows a subsequent material to make contact with the insulating layer 66. Subsequently, as shown in Figure 8c, a first conductive layer 73 is deposited over the mask template 72 and exposed portions of the insulating layer 66. The mask template 72 is then removed, leaving the first conductor 36 as shown in Figure 8d.

In Figure 8e, a second mask template 74 is placed over the first conductor 36. The mask template 74 selectively allows a subsequent material to make contact with the first conductor 36 and the insulating layer 66. Subsequently, as shown in Figure 8f, a second conductive layer 75 is deposited over the mask template 74 and exposed portions of the first conductor 36 and the insulating layer 66. The mask template 74 is then removed, leaving the second conductor 40 overlying the first conductor 36 and forming the thermocouple junction 46 as shown in Figure 8g. The protective layer 68 is then deposited over the first and second conductors 36 and 40 as illustrated in Figure 8h.

Figures 9a-9i are fragmentary cross-sectional diagrams that illustrate an alternative method of forming a thermocouple on the surface 30 of the semiconductor wafer substrate 28 using photolithographic techniques. In Figure 9a, the wafer substrate 28 is covered by the insulating layer 66 using a standard oxidation-type process such as steam or any other known semiconductor fabrication process. The insulating layer 66 may consist of a silicon dioxide or alternatively may be a silicon nitride. Other type insulating materials may also be used. The insulating layer 66 insulates the thermocouple junction 46 that will subsequently be formed thereon from any electrical interference with the semiconductor wafer substrate 28.

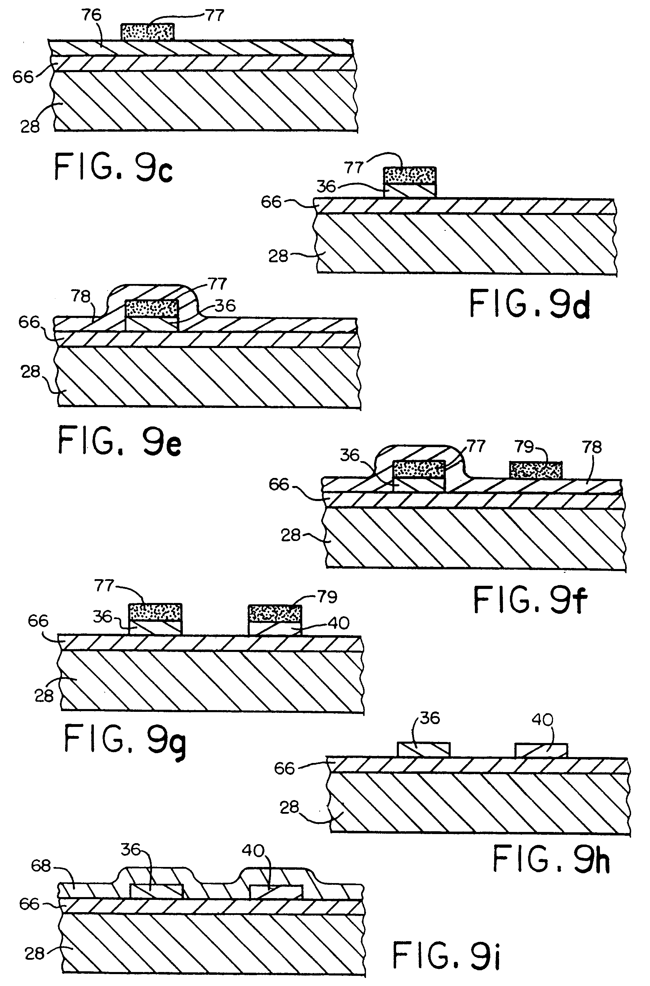

In Figure 9b, a first conductive layer 76 is deposited over the insulating layer 66 using a chemical vapor deposition technique, a sputter deposition technique or other known semiconductor fabrication process. Subsequently, as shown in Figure 9c, a photoresist 77 is deposited over the first conductive layer 76 and patterned to form a photomask. Preferably, the conductor thicknesses are at least 1000 angstroms to provide film homogeneity. The first conductive layer 76 is then exposed and subsequently etched using a dry reactive ion etching process, a chemical etch process or other known semiconductor fabrication process to form the first conductor 36 as shown in Figure 9d.

In Figure 9e, a second conductive layer 78 is formed over the surface in a similar manner as the first conductive layer 76. As was done with the first conductive layer 76, a second photoresist 79 is formed over the second conductive layer 78 and patterned to form a photomask as shown in Figure 9f. The second conductive layer 78 is then exposed and etched as done similarly with first conductive layer 76 to form the second conductor 40 as shown in Figure 9g. In Figure 9h, the first and second photoresist 77 and 79 are removed thereby leaving the first and second conductors 36 and 40 laterally disposed from one another and in electrical isolation from one another (except for the end region 44 where the first and second conductors 36 and 40 are patterned to overlap and make electrical contact as illustrated in Figure 7). The protective layer 68 is then deposited over the first and second conductors 36 and 40 as illustrated in Figure 9i.

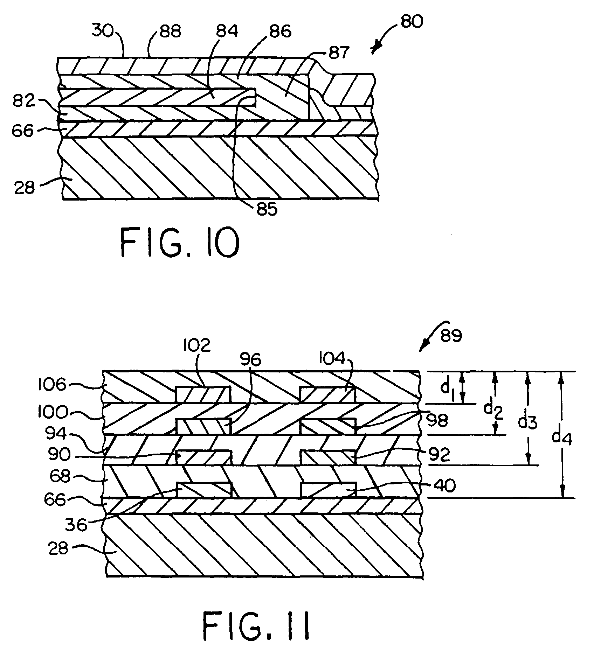

Figure 10 is a cross-sectional diagram of an alternative embodiment of the invention which comprises a vertically fabricated thermocouple 80 on the surface 30 of the semiconductor wafer 28. The thermocouple 80 includes an insulating layer 66 formed on the substrate 28. A first conductor 82 is deposited and patterned over the insulating layer 66 using either shadowmasking or photolithographic techniques. A second insulating layer 84 is deposited and patterned over the first conductor 82 such that a hole 85 is formed down to the first conductor 82 at its end. A second conductor 86 is deposited and patterned over the second insulating layer 84 to make electrical contact with the exposed end of the first conductor 82, thereby forming a thermocouple junction 87. An optional third insulating layer 88 may be deposited over the second conductor 86.

Vertically fabricated thermocouple 80 of Figure 10 differs from the thermocouple 34 of Figure 5 in that the two conductors 82 and 86 of thermocouple 80 are disposed vertically from one another rather than laterally. This advantageously reduces the amount of lateral surface area required of the thermocouple 80, thereby allowing for a greater number of such thermocouples 80 to be formed on the surface of the wafer 28.

Figure 11 is a cross-sectional view illustrating multiple thermocouples 89 stacked vertically over the semiconductor substrate 28. As in Figure 5, the cross-sectional view is taken at a location where the conductors that form the multiple thermocouples 89 are laterally disposed from one another. In a similar manner as illustrated in Figure 7, the conductors that form the multiple thermocouples 89 come into electrical contact at the end region 44 to form the thermocouple junctions. In Figure 11 the insulating layer 66 overlies the substrate 28. The first and second conductors 36 and 40 are patterned over the insulating layer 66 and are covered by the protective layer 68 which, in this case, acts as a second insulating layer. In a like manner, third and fourth conductors 90 and 92 are patterned over the second insulating layer 68 and are covered with a third insulating layer 94. The third and fourth conductors 90 and 92 form a second thermocouple vertically above the first thermocouple. A third and fourth thermocouple are shown constructed above the first two in a like manner. Selective electrical contact to each of the multiple thermocouples 89 can be achieved through a pattern of contacts and vias as is well known by those skilled in the art. Multiple thermocouples 89 allow one to measure the temperature at predetermined depths within a semiconductor water, and provide for a mapping of a vertical thermal gradient.

The invention overcomes the disadvantages of prior art wafer 10 of Figure 1. As an example, when the temperature instrumented semiconductor wafer 26 of Figure 3 is placed within the semiconductor manufacturing apparatus 60, it accurately senses the temperature at the wafer surface because the thermocouple junction 46 is on the surface of the semiconductor wafer 26. In this manner, the invention eliminates errors in thermocouple devices which are vertically embedded within a wafer because errors due to vertical thermal gradients are avoided.

The temperature instrumented semiconductor wafer 26 also substantially reduces errors due to thermal loading. Forming the first and second conductors 36 and 40 on the surface 30 of the semiconductor wafer 26 using semiconductor processing techniques such as shadowmasking or photolithography allows the mass of the thermocouple junction 46 itself to be substantially smaller than prior art sensors which use wire connections and ceramic potting compound to effectuate a thermocouple junction (junction 18 and glue 24 of prior art Figure 1). The substantial reduction in mass of the thermocouple junction 46 reduces thermal loading. Further, the temperature instrumented semiconductor wafer 26 eliminates the thermocouple sheaths 22 (of prior art Figure 1) from overlying the semiconductor wafer 26. The invention instead utilizes the first and second conductors 36 and 40 to relay electrical signals along the wafer surface 30. The mass of the conductive strips 36 and 40 is substantially less than prior art sheaths 22 on the semiconductor wafer and thus further reduces thermal loading over prior art thermocouple sensors. The reduction in thermal loading is even greater when multiple thermocouple junctions 32 are made on the wafer.

Temperature instrumented semiconductor wafer 26 also constitutes a substantial performance improvement over RTDs (resistance temperature detectors). The thermocouple semiconductor wafer 26 can accurately measure temperatures up to 2400°C while an RTD can only assure accuracy up to about 650°C. This makes RTDs unsuitable for many semiconductor processing steps that may reach as high as 1200°C. The temperature instrumented semiconductor wafer 26 may also be made to contain a large number of thermocouple junctions while RTDs are more limited. RTDs, due to their reliance on on accurate resistance measurement, must use large loads extending to the resistor to minimize the lead resistance. These large loads take space and prohibit a large number of sensing resistors from being utilized.

In an alternative embodiment shown in Figure 11, the multiple thermocouples 89 provide for a mapping of a vertical thermal gradient within a semiconductor wafer. Since one may determine the height of each insulating layer and conductor layer, the vertical depths for each thermocouple is known. Knowing the vertical thermal gradient is valuable information in semiconductor processing because although the surface temperature is critical to the present processing step, the temperature at various depths within the substrate 28 is critical to previous processing steps. For example, if an implantation step had been performed previously to form a region, a subsequent processing step having a high temperature will cause vertical and lateral diffusion of that region. A semiconductor circuit designer needs to know how much diffusion of that region to expect. Multiple thermocouples 89 allow one to accurately predict that diffusion because the temperature at that depth is determined by the thermocouple located at that vertical depth (d₁-d₄). Multiple thermocouples 89 also allow one to test the process as a whole. If a vertical temperature deviates substantially from its expected value, the deviation may be indicative of a failure of the thermocouple on the surface or some other type of process failure. Therefore the multiple thermocouples 89 improve the processing reliability.

Although the invention has been described in the context of several preferred embodiments, additional alternative embodiments also fall within the scope of the invention. For example, other dissimilar conductive materials besides tantalum and nickel may be utilized as the first and second conductors 36 and 40 such as, for example, rhodium, iron, aluminum, copper, iridium, molybdenum, platinum, titanium, tungsten, gold and chromium. Further, alloys and doped metals and other materials may also be utilized. To minimize the complexity of conversion circuitry, it is preferred to use alloys and doped metals that have a consistent composition along their length. Additionally, other insulating materials besides alumina may be utilized as the protective layer 68 and the diffusion barrier layer 70 that sufficiently protect the conductors 36 and 40 from surface contamination and migration from the substrate 28. Examples of such materials are silicon dioxide or silicon nitride. Further, combinations of these materials could also be utilized.

Although several embodiments of the invention have been disclosed for illustrative purposes, those skilled in the art will appreciate that various modifications, additions and substitutions are possible, without departing from the scope and spirit of the invention as defined in the accompanying claims.

## Claims

1. A temperature sensor, comprising:
a semiconductor wafer; and
a thermocouple junction on a surface of the semiconductor water.

2. The sensor of claim 1, wherein the thermocouple junction comprises:
a first conductor formed on the semiconductor wafer; and
a second conductor formed on the semiconductor water, wherein the second conductor is disposed from the first conductor and wherein the first and second conductors are dissimilar conductors and make electrical contact to one another at an overlapping region, thereby creating a thermocouple junction.

3. The sensor of claim 1, wherein the thermocouple junction comprises:
a first conductor; and
a second conductor disposed from the first conductor, wherein the first and second conductors make electrical contact to one another at an overlapping region, thereby creating the thermocouple junction.

4. The sensor of claim 1, further comprising an insulating layer disposed between the semiconductor wafer and the thermocouple junction.

5. The sensor of claim 1, further comprising an electrical connector coupled to the thermocouple junction for relaying electrical signals from the thermocouple junction.

6. The sensor of claim 1, further comprising a plurality of thermocouple junctions overlying the semiconductor wafer at various locations on the semiconductor wafer, such that the plurality of thermocouple junctions are operable to provide electrical indication of the temperature at the various locations, thereby creating a temperature mapping sensor.

7. The temperature sensor of claim 1, further comprising:
an insulating layer overlying the thermocouple junction; and
a second thermocouple junction overlying the insulating layer, thereby forming two vertically stacked thermocouples, one for sensing a temperature at the surface of the semiconductor wafer and an other at a predetermined vertical height from the surface of the semiconductor wafer.

8. A temperature instrumented semiconductor wafer, comprising:
a substrate;
an insulating layer overlying the substrate;
a first conductor overlying the insulating layer; and
a second conductor overlying the insulating layer and laterally disposed from the first conductor,
wherein the first and second conductors contact one another at an overlapping region, thereby forming a thermocouple junction on a surface of the wafer.

9. The wafer of claim 8, further comprising a plurality of first and second conductors paired together respectively to form a plurality of thermocouple junctions at different locations about the wafer surface, thereby effectuating a temperature mapping of the wafer.

10. The wafer of claim 8, wherein the first conductor comprises a patterned strip extending from the overlapping region to an electrical connector.

11. The wafer of claim 8, further comprising a diffusion barrier layer disposed between the insulating layer and the first and second conductors, wherein the diffusion barrier layer prevents migration of semiconductor material from the substrate to the first and second conductors.

12. The wafer of claim 8, further comprising a protection layer overlying the first and second conductors, thereby protecting the first and second conductors from contamination or degradation.

13. The wafer of claim 8, wherein the first conductor is tantalum and the second conductor is nickel.

14. The wafer of claim 8, wherein the first and second conductors are dissimilar and comprise thermocouple materials.

15. The wafer of claim 8, wherein the first and second conductors are dissimilar and are selected from the group consisting of tantalum, nickel, rhodium, iron, aluminum, copper iridium, molybdenum, platinum, titanium, tungsten, gold and chromium.

16. The wafer of claim 8, further comprising an electrical connector coupled to the thermocouple junction, wherein the electrical connector is operable to convey electrical signals to and from the thermocouple junction.

17. A method of forming a thermocouple sensor, comprising the steps of: overlying a semiconductor substrate with an insulating layer; and forming a thermocouple junction on the insulating layer.

18. The method of claim 17, wherein the step of overlying the semiconductor substrate with an insulating layer comprises the deposition of an insulator selected from the group consisting of silicon dioxide, silicon nitride and alumina.

19. The method of claim 17, wherein the step of forming a thermocouple junction comprises the steps of:
depositing a first conductive layer on the insulating layer;
patterning the first conductive layer, thereby forming a conductor strip having an end;
forming a second insulating layer over the conductor strip;
patterning the second insulating layer such that a hole is formed in the second insulating layer down to the end of the first conductor strip;
depositing a second conductive layer on the second insulating layer, wherein the second conductive layer is a dissimilar conductive material than the first conductive layer, and wherein the second conductive layer makes electrical contact down to the first conductor strip through the hole in the second insulating layer, thereby forming a thermocouple junction; and
patterning the second conductive layer, thereby forming a second conductor strip.

20. The method of claim 17, wherein the step of forming a thermocouple junction comprises the steps of;
forming a first conductor on the insulating layer; and
forming a second conductor on the insulating layer, wherein the second conductor is laterally disposed and dissimilar from the first conductor and contacts the first conductor at a termination point.

21. The method of claim 20, further comprising the step of overlying the first and second conductors with an insulating layer, thereby maintaining an electrical isolation of the first and second conductors from one another except for the termination point and protecting the first and second conductors from contamination or degradation.

22. The method of claim 17, wherein the step of forming a thermocouple junction comprises the steps of:
forming a first conductive layer and a second conductive layer on the insulating layer;
etching the first and second conductive layers, thereby forming a first and second patterned conductive strip, wherein the first and second conductive strips are disposed from one another and dissimilar and make electrical contact with one another at a termination point.

23. A temperature sensor, comprising:
a semiconductor wafer; and
a plurality of thermocouples formed on the semiconductor wafer and electrically insulated from one another, thereby creating a vertical stack of thermocouples on the semiconductor wafer,
wherein the plurality of thermocouples are operable to sense the temperature at a plurality of depths on the semiconductor wafer, thereby creating a vertical thermal gradient.

24. A temperature sensor, comprising:
a semiconductor wafer;
a first conductor deposited and patterned over the semiconductor wafer;
an insulating layer formed and patterned over the first conductor and having a hole in the insulating layer above one end of the first conductor; and
a second conductor deposited and patterned over the insulating layer and making contact down to the first conductor through the hole, thereby forming a thermocouple junction.
